# EUROPEAN PATENT SPECIFICATION

(11) **EP 2 682 163 B1**
(45) Date of publication and mention of the grant of the patent: **02.11.2016**
(21) Application number: 12175316.4
(22) Date of filing: 06.07.2012
(51) Int. Cl.: A63B 21/015, A63B 21/22, G01L 3/14, A63B 21/00, A63B 22/06

(54) **Torque Sensing Apparatus**
Drehmomentsensorvorrichtung
Appareil de détection de couple

(43) Date of publication of application: 08.01.2014
(73) Proprietor: Tonic Fitness Technology, Inc., Tainan Hsien (TW)
(72) Inventor: Wu, Mu-Chuan, Tainan City (TW)
(74) Representative: Becker Kurig Straus

(56) References cited:
- EP-A1- 2 471 580
- GB-A- 2 321 969
- US-A1- 2010 009 815

## Description

### 1. Field of the Invention

The invention relates to a torque sensing apparatus, and more particularly to a torque sensing apparatus applied to athletic equipments.

### 2. Description of the Prior Art(s)

A torque sensing apparatus is mounted on an athletic equipment such as an exercise bike to detect a torsional resistance of a torque supplier of the athletic equipment. Therefore, users can adjust the torsional resistance based on the detected results to fit with different needs of the users.

A conventional torque sensing apparatus has a variable resistor electrically connected to a controller of the athletic equipment. The controller detects a resistance value of the variable resistor changed with a movement of a connecting point of the variable resistor. The controller gauges a value of the torsional resistance of the torque supplier according to a change of a terminal voltage of the variable resistor.

The torque sensing apparatus can gauge the value of the torsional resistance of the torque supplier in cooperation with the controller of the athletic equipment. However, the variable resistor of the torque sensing apparatus is an adjustable contacting type. After the variable resistor of the torque sensing apparatus is operated repeatedly, the variable resistor of the torque sensing apparatus is abraded easily and decreases the precision of the torque sensing apparatus.

The main objective of the present invention is to provide a torque sensing apparatus to increase the precision of the torque sensing apparatus. The torque sensing apparatus comprises a torque adjusting assembly and a non-contact sensing assembly. The torque adjusting assembly has a fitting unit, a regulating rod and a regulating seat. The non-contact sensing assembly has a first device and a second device. The fitting unit has a fixed plate. The regulating rod is rotatably mounted through the fitting unit and has a threaded part protruding out of the fixed plate of the fitting unit. The regulating seat is movably mounted on the threaded part of the regulating rod and is located outside the fixed plate of the fitting unit. The first device is mounted on the fixed plate of the fitting unit. The second device is opposite the first device and is mounted on the regulating seat. The second device is kept from contacting the first device.

Users can turn the regulating rod to move the regulating seat axially along the regulating rod. Turning the regulating rod changes a distance between the fixed plate and the regulating seat and a distance between the first device and the second device. One of the first device and the second device detects a change of the distance between the first device and the second device and then generates a signal.

Accordingly, the first device is kept from being in contact with the second device. The signal is provided to a controller, and the controller gauges a torsional value of the torque adjusting assembly according to the signal. Thus, the non-contact sensing assembly is not abraded and increases the precision of the torque sensing apparatus.

### IN THE DRAWINGS

Fig. 1 is an operational side view of a torque sensing apparatus in accordance with the present invention mounted on a frame of an exercise bike;

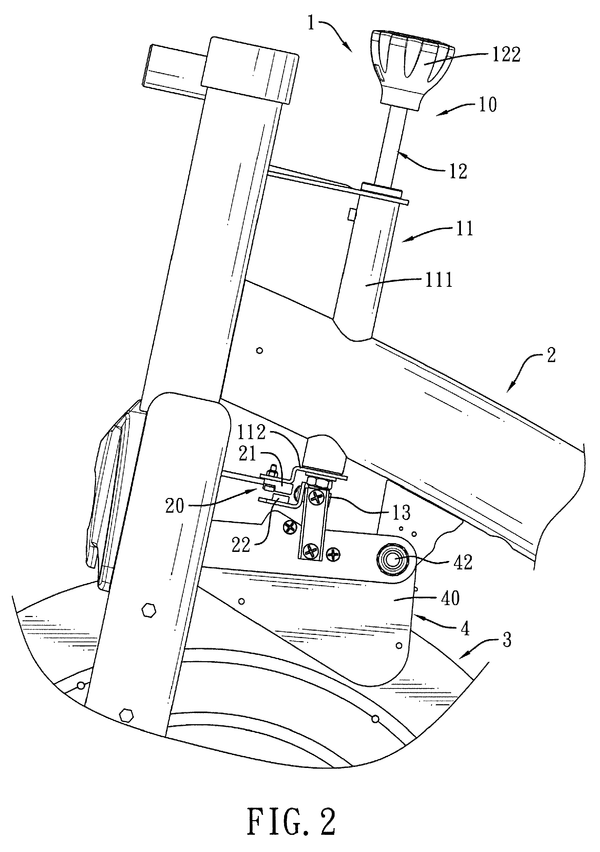

Fig. 2 is an enlarged operational side view of the torque sensing apparatus in Fig. 1;
Fig. 3 is an operational perspective view of the torque sensing apparatus in Fig. 1 combined with a torque supplier;
Fig. 4 is a side view in partial section of the torque sensing apparatus in Fig. 1 combined with a frame of an exercise bike, a flywheel and a torque supplier; and
Fig. 5 is a side view in partial section of the torque sensing apparatus in Fig. 1 showing that a regulating rod changes a distance between a first device and a second device.

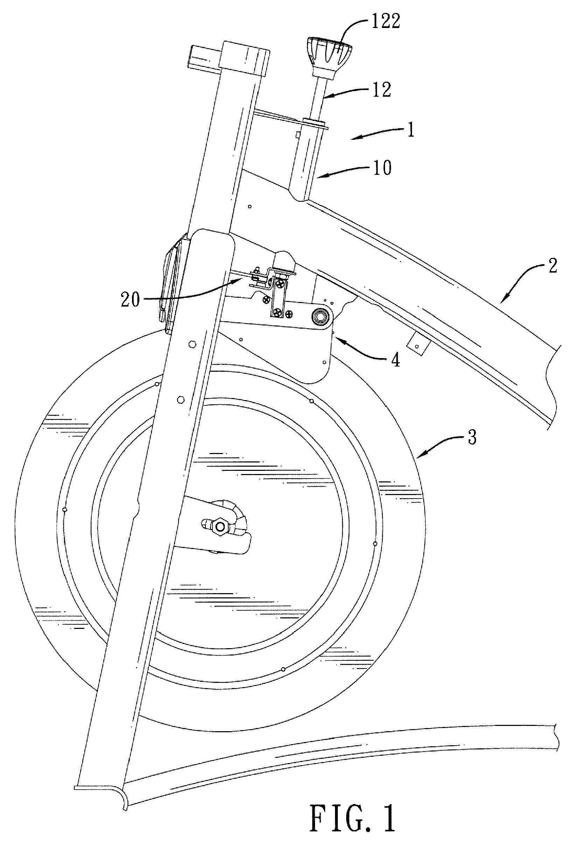

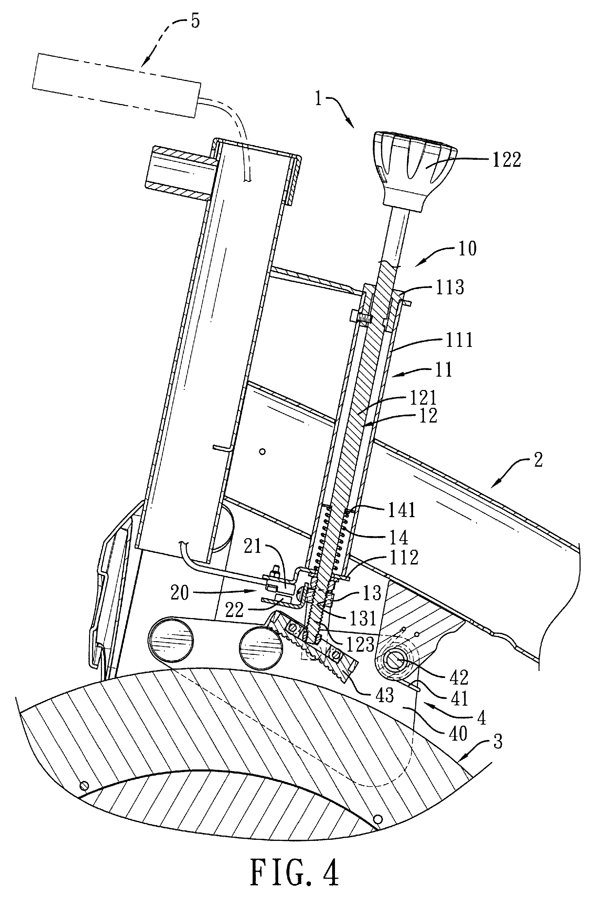

With reference to Figs. 1 and 4, a torque sensing apparatus 1 in accordance with the present invention comprises a torque adjusting assembly 10 and a non-contact sensing assembly 20.

The torque adjusting assembly 10 has a fitting unit 11, a regulating rod 12 and a regulating seat 13. The fitting unit 11 has a tube 111, a fixed plate 112, a thimble 113, a spacer 141 and a spring 14. The tube 111 is hollow and has a first end and a second end being opposite to the first end. The fixed plate 112 is mounted on the first end of the tube 111. The thimble 113 is mounted into the second end of the tube. The spacer 141 is mounted in the tube 111. The spring 14 is mounted in the tube. The spring 14 has a top end and a bottom end. The top end of the spring 14 is connected with the spacer 141. The bottom end of the spring 14 is opposite to the top end of the spring 14 and is connected with the fixed plate 112 of the fitting unit 11.

The regulating rod 12 is rotatably mounted through the tube 111 of the fitting unit 11 and has a threaded part 123 protruding out of the fixed plate 112 of the fitting unit 11. The regulating rod 12 has a body 121 and a head 122. The body 121 has a connected end and a combining end. The threaded part 123 is formed on the connected end of the body 121. The combining end is opposite to the connected end of the body 121. The head 122 is mounted on the combining end of the body 121 and is located outside the second end of the tube 111.

The regulating seat 13 is movably mounted on the threaded part of the regulating rod 12 and located outside the fixed plate 112 of the fitting unit 11 and has a screw hole 131. The screw hole 131 is formed through the regulating seat 13. The threaded part 123 of the regulating rod 12 is screwed with and mounted through the screw hole 131 of the regulating seat 13. The regulating rod 12 can be turned to enable the regulating seat 13 to move along the axial direction of the regulating rod 12, such that a distance between the fixed plate 112 and the regulating seat 13 is changed.

The non-contact sensing assembly 20 has a first device and a second device. The first device is mounted on the fixed plate 112 of the fitting unit 11. The second device faces the first device and is mounted on the regulating seat 13. Moreover, the second device is kept from contacting the first device of the non-contact sensing assembly 20. One of the first device and the second device is adapted to detect a change of distance between the first device and the second device and then generates a signal.

The first device is an induction integrated circuit (IC) sensor 21 and the second device is a magnetic component 22. Or, the first device is a magnetic component 22 and the second device is an induction IC sensor 21. The induction IC sensor 21 comprises a Hall sensor, and the magnetic component 22 is a permanent magnet. The induction IC sensor 21 is adapted to connect with a controller 5, and the controller 5 gauges a torsional value of the torque adjusting assembly 10 according to the signal generated by the induction IC sensor 21. A change of the relative distance between the fixed plate 112 and the regulating seat 13 causes a change of magnetic flux between the induction IC sensor 21 and the magnetic component 22.

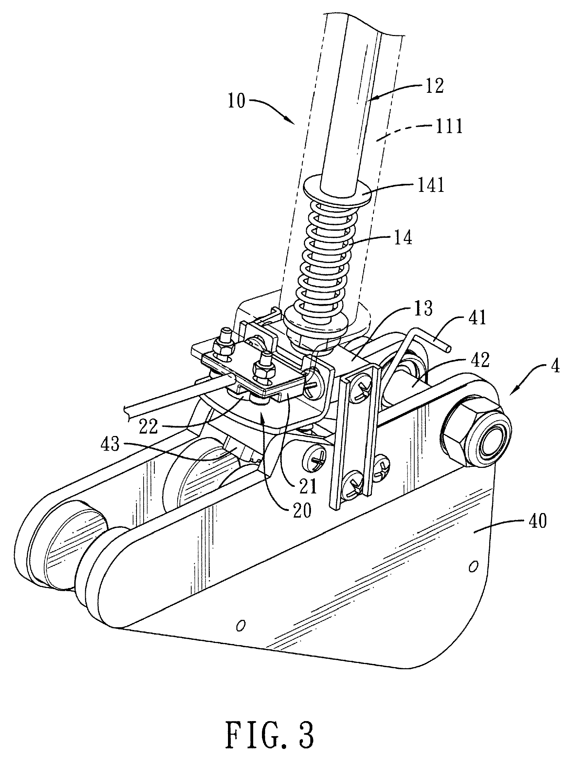

With reference to Fig. 1 and 3, the torque sensing apparatus 1 is mounted on an athletic equipment such as an exercise bike. The exercise bike has a frame 2, a flywheel 3, a torque supplier 4 and a controller 5. The flywheel 3, the torque supplier 4 and the controller 5 are mounted on the frame 2 of the exercise bike. The torque supplier 4 has a seat 40, a pivot shaft 42, a torsion spring 41 and a resistor 43. The seat 40 is pivoted on the frame 2 of the exercise bike by the pivot shaft 42. The seat 40 is connected to the regulating seat 13 with two pivot arms. With the arrangement of the pivot arms, the regulating seat 13 can be kept from rotating with the regulating rod 12 when the regulating rod 12 is rotating. The torsion spring 41 and the resistor 43 are mounted in the seat 40.

With reference to Fig. 4, the tube 111 of the torque adjusting assembly 10 is mounted on the frame 2. The regulating seat 13 is connected with the seat 40 of the torque supplier 4. The seat 40 keeps the regulating seat 13 from rotating with the regulating rod 12. Then, the regulating rod 12 is rotated to induce the regulating seat 13 to be axially moved along the regulating rod 12 and the seat 40 of the torque supplier 4 to be pivoted. The induction IC sensor 21 of the torque sensing apparatus 1 is connected with the controller 5 by a signal wire. The seat 40 pivoted can cause the change of the position of the resister 43, and then the resistor 43 is pressed to abut against the flywheel 3 and generates a torsional resistance to the flywheel 3.

To test the torque sensing apparatus, a torque-detecting device is assembled on the flywheel 3. The parameters of the regulating rod 12, such as rotating angles or rotating circles of the regulating rod 12, are recorded. The change of the parameters of the regulating rod 12 can change the relative distance between the induction IC sensor 21 and the magnetic component 22. Then, the change of the relative distance between the induction IC sensor 21 and the magnetic component 22 can change the magnetic flux between the induction IC sensor21 and the magnetic component 22. Afterwards the induction IC sensor 21 detects the change of magnetic flux between the induction IC sensor 21 and the magnetic component 22 and generates a voltage value. The change of magnetic flux and the voltage value are recorded. Furthermore, a contrast table about the voltage value and the change of magnetic flux is built and recorded in the controller 5, and the torque-detecting device is then removed from the flywheel 3.

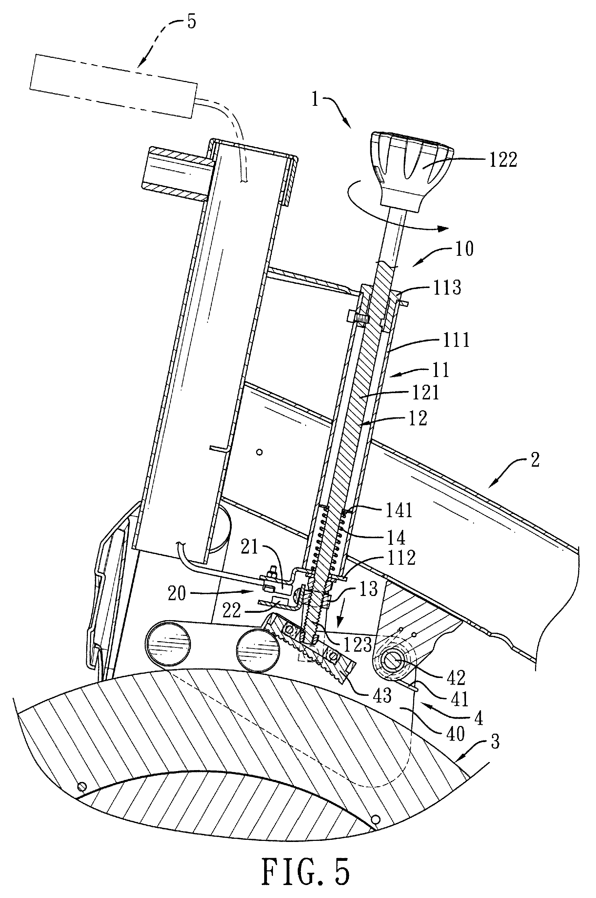

When the exercise bike is in use, a suitable torsion is set by means of turning the regulating rod 12. With reference to Fig. 5, the regulating seat 13 is axially moved along the regulating rod 12 when the regulating rod 12 is rotated, such that the relative distance between the regulating seat 13 and the fixed plate 112 of the fitting unit 11, the relative distance between the induction IC sensor 21 and the magnetic component 22, and the position of the resistor 43 of the torque supplier 4 are also changed. The change of the position of the resistor 43 can change the torsional resistance of the flywheel 3 pressed by the resistor 43. Furthermore, the controller 5 judges a corresponding torsion value based on the contrast table and the voltage value generated by the change of magnetic flux between the induction IC sensor 21 and the magnetic component 22. The corresponding torsion value is shown on a screen of the controller 5 to enable the user to read the valve directly and easily.

Accordingly, because the induction IC sensor 21 and the magnetic component 22 are not in contact, the non-contact sensing assembly 20 is not abraded and increases the precision of the torque sensing apparatus 1.

## Claims

1. A torque sensing apparatus (1) having:
a torque adjusting assembly (10) having:
a fitting unit (11) having:
a first end; and
a fixed plate (112) mounted on the first end of the fitting unit (11);
a regulating rod (12) rotatably mounted through the fitting unit (11) and the fixed plate (112) having:
a threaded part (123) formed on the regulating rod (12) and protruding out of the fixed plate (112) of the fitting unit (11); and
a regulating seat (13) movably mounted on the threaded part (123) of the regulating rod (12) and located outside the fixed plate (112) of the fitting unit (11) and having:
a screw hole (131) formed through the regulating seat (13), and the threaded part (123) of the regulating rod (12) protruding through the screw hole (131) of the regulating seat (13); the torque sensing apparatus (1) being **characterized in** further comprising:
a non-contact sensing assembly (20) having:
a first device mounted on the fixed plate (112) of the fitting unit (11); and
a second device mounted on the regulating seat (13), wherein the second device is kept from contacting the first device, and the first device or the second device detects a change of distance between the first device and the second device and then generates a signal.

2. The torque sensing apparatus as claimed in claim 1, wherein the first device is an induction integrated circuit sensor (21), the second device is a magnetic component (22), and the induction integrated circuit sensor (21) is adapted to connect with a controller.

3. The torque sensing apparatus as claimed in claim 1, wherein the first device is a magnetic component (22), the second device is an induction integrated circuit sensor (21), and the induction integrated circuit sensor (21) is adapted to connect with a controller.

4. The torque sensing apparatus as claimed in claim 2, wherein the induction integrated circuit sensor (21) comprises a Hall sensor, and the magnetic component (22) is a permanent magnet.

5. The torque sensing apparatus as claimed in claim 3, wherein the induction integrated circuit sensor (21) comprises a Hall sensor, and the magnetic component (22) is a permanent magnet.

6. The torque sensing apparatus as claimed in one of claims 1 to 5, wherein:
the fitting unit (11) comprises:
a tube (111) being hollow and having:
a second end formed on the tube (111) and being opposite to the first end;
a thimble (113) mounted into the second end of the tube (111);
a spacer (141) mounted in the tube; and
a spring (14) mounted in the tube (111) and having:
a top end connected with the spacer (141); and
a bottom end being opposite to the top end of the spring (14) and connected with the fixed plate (112) of the fitting unit (11); and the regulating rod (12) has:
a body (121) having:
a connected end on which the threaded part (123) is formed; and
a combining end being opposite to the connected end of the body; and
a head (122) mounted on the combining end of the body (121) and located outside the second end of the tube (111).

## Patentansprüche

1. Drehmomenterfassungsapparatur (1), mit:
einer Drehmomenteinstellungsanordnung (10) mit:
einer Anpassungseinheit (11) mit:
einem ersten Ende; und
einer befestigte Platte (112), die an dem ersten Ende der Anpassungseinheit (11) angebracht ist;
eine Regulationsstange (12), die drehbar durch die Anpassungseinheit (11) und die befestigte Platte (112) hindurch angebracht ist, mit:
einem Gewindeabschnitt (123), der an der Regulationsstange (12) gebildet ist und der sich aus der befestigten Platte (112) der Anpassungseinheit (11) hinaus erstreckt; und
einen Regulationssitz (13), der beweglich an dem Gewindeabschnitt (123) der Regulationsstange (12) angebracht ist und sich außerhalb der befestigten Platte (112) der Anpassungseinheit (11) befindet und aufweist:
ein Schraubloch (131), das durch den Regulationssitz (13) hindurch gebildet ist, und wobei sich der Gewindeabschnitt (123) der Regulationsstange (12) durch das Schraubloch (131) des Regulationssitzes (13) hindurch erstreckt; wobei die Drehmomenterfassungsapparatur (1) **dadurch gekennzeichnet ist, dass** sie weiterhin umfasst:
eine kontaktlose Erfassungsanordnung (20) mit:
einer ersten Vorrichtung, die an der befestigten Platte (112) der Anpassungseinheit (11) angebracht ist; und
einer zweiten Vorrichtung, die an dem Regulationssitz (13) angebracht ist, wobei die zweite Vorrichtung davon abgehalten wird die erste Vorrichtung zu berühren und wobei die erste Vorrichtung oder die zweite Vorrichtung eine Änderung der Entfernung zwischen der ersten Vorrichtung und der zweiten Vorrichtung erfasst und dann ein Signal erzeugt.

2. Drehmomenterfassungsapparatur gemäß Anspruch 1, wobei die erste Vorrichtung ein Induktions-integrierter-Schaltkreis-Sensor (21) ist, die zweite Vorrichtung eine magnetische Komponente (22) ist und der Induktions-integrierter-Schaltkreis-Sensor (21) angepasst ist, um sich mit einem Controller zu verbinden.

3. Drehmomenterfassungsapparatur gemäß Anspruch 1, wobei die erste Vorrichtung eine magnetische Komponente (22) ist, die zweite Vorrichtung ein Induktions-integrierter-Schaltkreis-Sensor (21) ist und der Induktions-integrierter-Schaltkreis-Sensor (21) angepasst ist, um sich mit einem Controller zu verbinden.

4. Drehmomenterfassungsapparatur gemäß Anspruch 2, wobei der Induktions-integrierter-Schaltkreis-Sensor (21) einen Hall-Sensor umfasst und die magnetische Komponente (22) ein Permanentmagnet ist.

5. Drehmomenterfassungsapparatur gemäß Anspruch 3, wobei der Induktions-integrierter-Schaltkreis-Sensor (21) einen Hall-Sensor umfasst und die magnetische Komponente (22) ein Permanentmagnet ist.

6. Drehmomenterfassungsapparatur gemäß einem der Ansprüche 1 bis 5, wobei:
die Anpassungseinheit (11) umfasst:
eine Röhre (111), die hohl ist und aufweist:
ein zweites Ende, das an der Röhre (111) gebildet ist und dem ersten Ende gegenüberliegt;
eine Kausche (113), die in dem zweiten Ende der Röhre (111) angebracht ist;
einen Abstandshalter (141), der in der Röhre angebracht ist; und
eine Feder (14), die in der Röhre (111) angebracht ist und aufweist:
ein oberes Ende, das mit dem Abstandshalter (141) verbunden ist; und
ein unteres Ende, das dem oberen Ende der Feder (14) gegenüberliegt und mit der befestigten Platte (112) der Anpassungseinheit (11) verbunden ist; und
eine Regulierungsstange (12) mit:
einem Körper (121) mit:
einem verbundenen Ende, an dem der Gewindeabschnitt (123) gebildet ist; und
ein Kombinationsende, das dem verbundenen Ende des Körpers gegenüberliegt; und
einen Kopf (122), der an dem Kombinationsende des Körpers (121) angebracht ist und sich außerhalb des zweiten Endes der Röhre (111) befindet.

## Revendications

1. Dispositif de détection de couple (1) comportant :
un ensemble de réglage de couple (10) comportant :
une unité de montage (11) comportant :
une première extrémité ; et
une plaque fixe (112) montée sur la première extrémité de l'unité de montage (11) ;
une tige de régulation (12) montée de façon rotative à travers l'unité de montage (11) et la plaque fixe (112), comportant :
une partie filetée (123) formée sur la tige de régulation (12) et faisant saillie hors de la plaque fixe (112) de l'unité de montage (11) ; et
un siège de régulation (13) monté de façon mobile sur la partie filetée (123) de la tige de régulation (12) et située à l'extérieur de la plaque fixe (112) de l'unité de montage (11) et comportant :
un trou de vissage (131) formé à travers le siège de régulation (13), et la partie filetée (123) de la tige de régulation (12) faisant saillie à travers le trou de vissage (131) du siège de régulation (13) ; le dispositif de détection de couple (1) étant **caractérisé en ce qu'**il comprend en outre :
un ensemble de détection sans contact (20) comportant :
un premier dispositif monté sur la plaque fixe (112) de l'unité de montage (11) ; et
un deuxième dispositif monté sur le siège de régulation (13), le deuxième dispositif étant mis hors de contact avec le premier dispositif, et le premier dispositif ou le deuxième dispositif détectant un changement de distance entre le premier dispositif et le deuxième dispositif, et générant ensuite un signal.

2. Dispositif de détection de couple selon la revendication 1, dans lequel le premier dispositif est un capteur à circuit intégré à induction (21), le deuxième dispositif est un composant magnétique (22), et le capteur à circuit intégré à induction (21) est adapté pour être relié à un contrôleur.

3. Dispositif de détection de couple selon la revendication 1, dans lequel le premier dispositif est un composant magnétique (22), le deuxième dispositif est un capteur à circuit intégré à induction (21), et le capteur à circuit intégré à induction (21) est adapté pour être relié à un contrôleur.

4. Dispositif de détection de couple selon la revendication 2, dans lequel le capteur à circuit intégré à induction (21) comprend un capteur Hall, et le composant magnétique (22) est un aimant permanent.

5. Dispositif de détection de couple selon la revendication 3, dans lequel le capteur à circuit intégré à induction (21) comprend un capteur Hall, et le composant magnétique (22) est un aimant permanent.

6. Dispositif de détection de couple selon l'une des revendications 1 à 5, dans lequel :
l'unité de montage (11) comprend :
un tube (111) creux et comportant :
une deuxième extrémité formée sur le tube (111) et opposée à la première extrémité ;
une cosse (113) montée dans la deuxième extrémité du tube (111) ;
un écarteur (141) monté dans le tube ; et
un ressort (14) monté dans le tube (111) et comportant :
une extrémité supérieure reliée à l'écarteur (141) ; et
une extrémité inférieure opposée à l'extrémité supérieure du ressort (14) et reliée à la plaque fixe (112) de l'unité de montage (11) ; et
la tige de régulation (12) comporte :
un corps (121) comportant :
une extrémité connectée sur laquelle est formée la partie filetée (123) ; et
une extrémité de combinaison opposée à l'extrémité connectée du corps ; et
une tête (122) montée sur l'extrémité de combinaison du corps (121) et située à l'extérieur de la deuxième extrémité du tube (111) .
